# EUROPEAN PATENT SPECIFICATION

(11) **EP 2 760 801 B1**
(45) Date of publication and mention of the grant of the patent: **07.11.2018**
(21) Application number: 12772628.9
(22) Date of filing: 26.09.2012
(51) Int. Cl.: C04B 24/38, C04B 28/02, C09K 8/487, E21B 33/14, C04B 103/46

(54) **CEMENTING COMPOSITION COMPRISING ANIONICALLY - AND HYDROPHOBICALLY-MODIFIED (HYDROXY)ALKYL CELLULOSE ETHERS AND ITS USE**
ZEMENTIERUNGSZUSAMMENSETZUNG MIT ANIONISCH UND HYDROPHOB MODIFIZIERTEN (HYDROXY)ALKYL CELLULOSEETHERN UND IHRE VERWENDUNG
COMPOSITION DE CIMENTATION COMPRENANT DES ÉTHERS D' (HYDROXY)ALKYL CELLULOSE MODIFIÉS ANIONIQUEMENT ET HYDROPHOBIQUEMENT ET SON UTILISATION

(30) Priority: 29.09.2011 US 201161541001 P
(43) Date of publication of application: 06.08.2014
(73) Proprietor: Dow Global Technologies LLC, Midland, MI 48674 (US)
(72) Inventor: WITHAM, Cole A., Pearland, TX 77584 (US); POINTDEXTER, Michael K., Sugar Land, TX 77478 (US); KUHLMAN, Roger L., Lake Jackson, TX 77566 (US)
(74) Representative: Beck Greener
(86) International application number: PCT/US2012/057177
(87) International publication number: WO 2013/049094

(56) References cited:
- WO-A1-96/40599
- WO-A2-2012/021626
- US-A- 4 573 534
- US-B1- 6 669 863
- BUELICHEN D ET AL: "Formation of colloidal polymer associates from hydroxyethyl cellulose (HEC) and their role to achieve fluid loss control in oil well cement", PROCEEDINGS - SPE INTERNATIONAL SYMPOSIUM ON OILFIELD CHEMISTRY - SOCIETY OF PETROLEUM ENGINEERS - INTERNATIONAL SYMPOSIUM ON OILFIELD CHEMISTRY 2011 2011 SOCIETY OF PETROLEUM ENGINEERS (SPE) USA, vol. 1, April 2011 (2011-04), pages 429-439, XP8158561,

## Description

### FIELD OF THE INVENTION

This invention relates to cementing compositions useful for cementing casing in boreholes of oil, gas, and similar wells and containing a hydraulic cement in combination with a cellulose derivative that will inhibit fluid loss from aqueous slurries of the cementing composition and uses thereof. Said cementing composition comprises an anionically- and hydrophobically-modified hydroxyethylcellulose in combination with a dispersant, preferably a low molecular weight sulfonated polymer, melamine formaldehyde condensate, or a polyacrylate polymer.

### BACKGROUND OF THE INVENTION

Polymers are used extensively in oil field applications as fluid additives for drilling, cementing, gas and oil well fracturing and enhanced oil-recovery processes. In cementing operations of gas or oil wells, a hydraulic cement is normally mixed with sufficient water to form a pumpable slurry, and the slurry is injected into a subterranean zone to be cemented. After placement in the zone, the cement slurry sets into a hard mass. In primary cementing, where a cement slurry is placed in the annulus between a casing or liner and the adjacent earth formations, loss of fluid is a major concern.

Fluid loss, especially at high temperature, high pressure, and salt environments, is a critical concern for cement slurry formulation. The main purpose of fluid loss additives is to prevent the dehydration of the cement slurry that can reduce its pumpability and affect its other designed properties. Loss of a significant amount of water from the cement slurry can cause changes in several important job parameters, such as pumping time and frictional pressure. Deep oil wells are generally subjected to high temperature gradients that may range from 4.4°C (40°F) at the surface to over 204.4°C (400°F) at bottom hole conditions.

In general, two types of fluid loss additives are used in the cementing industry. They are classified as low temperature (< 110°C (230°F)) or high temperature (> 110°C (230°F)) fluid loss additives. Synthetic polymers and derivatives of polysaccharides are used in oil field operations as fluid loss additives in oil well cements. Some examples of known polysaccharide derivatives are cellulose ether compounds such as hydroxyethylcellulose ether (HECE), anionic cellulose ethers, and hydrophobically modified hydroxyethylcellulose (HMHEC).

Nonionic cellulose ethers are generally known in the art. They are employed in a variety of industrial applications, as thickeners, as water retention aids, and as suspension aids in certain polymerization processes, among others.

USP 4,462,837 discloses a cement with a hydroxyethylcellulose ether (HECE) having a critical viscosity or a mixture of HECE and hydroxypropylcellulose ether of a critical viscosity plus a D.Buelichen et al. in their paper "Formation of colloidal polymer associates from hydroxyethyl cellulose (HEC) and their role to achieve fluid loss control in oil well cement (SPE International Symposium on Oilfield Chemistry, 2011) describe the synergistic role of HEC and a sulfonated melamine formaldehyde dispersant in fluid loss control of oil well cements.

EP 0314118 discloses the use of hydrophobically-modified cellulose ethers, such as hydrophobically-modified hydroxyethyl cellulose having a hydroxyethyl molar substitution (MS) of 1.5 and a long chain alkyl group modifier having 6 to 25 carbon atoms.

Anionic-modified cellulose ethers are generally known in the art. They are employed as thickeners, rheology modifiers, and emulsion stabilizers in a variety of industrial applications, for example water based paints, oil drilling, paper making, laundry detergents, and personal care products, among others.

USP 6,669,863 discloses a process to make anionic-modified cellulose ethers by a process comprising a reaction of an alkali metal cellulose with two reagents, preferably chloroacetic acid and n-butyl glycidyl ether, and the use thereof as a thickener, rheology modifier, or stabilizer.

Anionically- and hydrophobically-modified cellulose ethers are known. They are employed as thickeners and emulsion stabilizers in industrial applications, such as used in latexes and cosmetics.

USP 5,891,450 discloses a polysaccharide derivative obtained by substituting some or all hydrogen atoms on hydroxyl groups with hydrophobic groups and sulfoalkyl groups for use as thickeners in cosmetic compositions.

USP 6,627,751 discloses a process to make a hydrophobically-modified anionic cellulose ether by reacting an alkali metal cellulose with at least three alkylating agents with reference to use in latex systems.

None of the aforementioned prior art describes the specific aqueous cementing composition comprising the modified (hydroxy)alkyl cellulose ether of the present invention for oil field applications, especially in cementing fluid loss applications. Hence, a need still exists in the oil field industry for a cost effective cementing composition with improved fluid loss properties which can help reduce pumping time and decrease frictional pressure.

### SUMMARY OF THE INVENTION

The present invention is an aqueous cementing composition and method to use thereof.

In one embodiment the present invention is an aqueous cementing composition for cementing a casing in a borehole of a well comprising (a) water and (b) a cementing composition comprising: (i) a hydraulic cement, (ii) an anionically- and hydrophobically-modified (hydroxy)alkyl cellulose ether, (iii) a dispersant, and (iv) optionally one or more other additives conventionally added to aqueous cementing compositions useful in cementing casings in the borehole of wells.

Another embodiment of the present invention is a method for cementing a casing in a borehole of a well comprising the use of an aqueous cementing composition comprising: (a) water and (b) a cementing composition comprising: (i) a hydraulic cement, (ii) an anionically- and hydrophobically-modified (hydroxy)alkyl cellulose ether, (iii) a dispersant, and (iv) optionally one or more other additives conventionally added to aqueous cementing compositions useful in cementing casings in the borehole of wells.

The anionically- and hydrophobically-modified hydroxyethyl cellulose, preferably has an ethylene oxide molar substitution of from 0.5 to 3.5, a hydrophobe degree of substitution of from 0.001 to 0.025, an anionic degree of substitution of from 0.001 to 1, and a weight-average molecular weight of from 100,000 to 4,000,000 Daltons.

Preferably in the above disclosed composition and method, the dispersant is a sulfonated polymer, melamine formaldehyde condensate, a naphthalene formaldehyde condensate, a branched polycarboxylate polymer, or non-branched polycarboxylate polymer, more preferably the dispersant is a sulfonated melamine formaldehyde condensate, a melamine formaldehyde condensate, a sulfonated naphthalene formaldehyde condensate, a sodium salt of a sulfonated naphthalene formaldehyde condensate, a potassium salt of a sulfonated naphthalene formaldehyde condensate, a polynaphthalene sulfonate, a sulfonated polyacrylamide, a condensate of a ketone, an aldehyde and sodium sulfite, or a sulfonated styrene/maleic anhydride copolymer.

Preferably in the above disclosed composition and method, the cementing composition comprises one or more additive selected from calcium chloride, sodium chloride, gypsum, sodium silicate, sea water, bentonite, diatomaceous earth, coal, perlite, pozzolan, hematite, ilmenite, barite, silica flour, sand, lignins, sodium or calcium lignosulfonates, carboxymethylhydroxyethyl-cellulose ether, gilsonite, walnut hulls, cellophane flakes, gypsum cement, bentonite-diesel oil, nylon fibers, or latex.

Preferably in the above disclosed composition and method, the aqueous cementing composition has an initial plastic viscosity (PV) at 80°F of equal to or less than 300.

Preferably in the above disclosed composition and method, the dispersant is added to the water before adding the hydrophobically modified (hydroxy)alkyl cellulose ether.

Preferably the above disclosed method comprises the steps of: A) pumping downwardly into said casing said aqueous cementing composition, B) pumping said aqueous cementing composition upwardly into the annulus surrounding said casing, C) continuing said pumping until said aqueous composition fills that portion of the annular space desired to be sealed, and D) maintaining said aqueous cementing composition in place until the cement sets.

### DETAILED DESCRIPTION OF THE INVENTION

The aqueous cementing composition of the present invention comprises (a) water, (b) a cementing composition comprising (i) a hydraulic cement, (ii) an anionically- and hydrophobically-modified hydroxyethyl cellulose ether as a fluid loss additive, (iii) a dispersant, and optionally (iv) one or more other additives conventionally added to aqueous cementing compositions useful in cementing casings in the borehole of wells.

Fluid loss, or like terminology, refers to any measure of water released or lost from a slurry over time. Fluid loss is measured in accordance with Recommended Practice for Testing Well Cements, API Recommended Practice 10B-2, 23rd Edition (2002) and is expressed in mL/30 minutes. According to the invention, slurries are measured at a pressure of 1,000 pounds-force per square inch gauge (psig) and the indicated test temperature.

Free fluid, as used herein, refers to the aqueous phase that easily separates from a slurry under gravity separation over time. To test for free fluid see, Recommended Practice for Testing Well Cements, API Recommended Practice 10A, 23rd Edition (2002). Briefly, the cement slurry is prepared and conditioned to the test temperature. The slurry is then poured into a graduated cylinder which is placed in a water bath that is maintained at the test temperature. The free fluid is the amount of water, in volume percent, which separates after two hours.

For the purposes of this invention, plastic viscosity (PV) as used in reference to the slurry, is calculated as the difference between the viscometer reading at 300 RPM (θ₃₀₀) and the viscometer reading at 100 RPM (θ₁₀₀) multiplied by 1.5. In other words, PV = Viscosity (θ₃₀₀-θ₁₀₀) x 1.5. The plastic viscosity is measured at the reported test temperature with a rotational viscometer consistent with the practice and procedures outlined in API RP 13B-1.

Yield point (YP) relates to the flow resistance of the cement slurry. It is calculated from the plastic viscosity as follows: yield point (lb/100 ft²) = θ₃₀₀ - plastic viscosity. The yield point is measured at the indicated test temperature with a rotational viscometer consistent with the practice and procedures outlined in API RP 13B-1. As noted, the yield point is also calculated from the plastic viscosity.

By weight of cement (bwoc) refers to a weight of an additive in dry form as added to a cement composition based on the cement solids only. For example, 2 parts weight of an additive which is added to 100 parts weight of cement solids is present in an amount of 2 % bwoc.

The cementing composition (b) of the present invention is useful in all types of water generally encountered in drilling operations, i.e., fresh and tap water, natural and synthetic sea water, and natural and synthetic brine. The most commonly used source of water is fresh water from wells, rivers, lakes, or streams when drilling on land, and sea water when drilling in the ocean. The aqueous cementing composition generally contains about 30 to 200 weight percent water by weight of cement (% bwoc). The amount of water is given as a weight percent by weight of cement (% bwoc). To exemplify, an aqueous cementing composition comprising 200 % bwoc water would comprise 200 weight units of water and 100 weight units of cement for a total of 300 weight units. If said example additionally had 5 % bwoc additives, the aqueous cementing solution would comprise 200 weight units of water, 100 weight units of cement, and 5 weight units of additives for a total of 305 weight units. In another example, an aqueous cementing composition comprising 40 % bwoc water would comprise 40 weight units of water and 100 weight units of the cement for a total of 140 weight units.

The cementing composition (b) of the present invention comprises (i) any of the known hydraulic cements, and preferably, contains Portland cement based hydraulic cement such as API types A through J. The cementing composition comprises a hydraulic cement in an amount of from 40 weight percent to 99.9 weight percent based on the weight of the cementing composition. Preferably hydraulic cement is present in an amount of from equal to or greater than 40 weight percent based on the weight of the cementing composition, preferably equal to or greater than 45 weight percent, more preferably equal to or greater than 50 weight percent, and even more preferably equal to or greater than 55 weight percent based on the weight of the cementing composition. Preferably the hydraulic cement is present in an amount of from equal to or less than 99.9 weight percent based on the weight of the cementing composition, preferably equal to or less than 98 weight percent, more preferably equal to or less than 95 weight percent, and even more preferably equal to or less than 80 weight percent based on the weight of the cementing composition. For example, if the cementing composition is 40 weight percent cement, it comprises 40 weight units of cement and 60 weight units of additional components.

The fluid loss additive in the cementing composition (b) of the present invention is (ii) an anionically- and hydrophobically-modified (hydroxy)alkyl cellulose ether. As used herein, the term "anionically- and hydrophobically-modified cellulose ether" means that a cellulose ether is modified with both anionic substituents and hydrophobic substituents. As used herein, the term "hydrophobically modified cellulose ether" refers to cellulose ethers with hydrophobic groups chemically attached to a hydrophilic polymer backbone. The hydrodrophobically modified cellulose ether is water soluble, due at least in part to the presence of the hydrophilic polymer backbone, where the hydrophobic groups can be attached to the ends of the polymer backbone (end-capped) and/or grafted along the polymer backbone (comb-like polymers). As used herein, the term "anionically-modified cellulose ether" refers to cellulose ethers with anionic groups chemically attached to a hydrophilic polymer backbone.

The anionically- and hydrophobically-modified (hydroxy)alkyl cellulose ether is present in the cementing composition of the present invention in an amount of from 0.01 % bwoc to 3 % bwoc. Preferably the anionically- and hydrophobically-modified (hydroxy)alkyl cellulose ether is present in an amount of from equal to or greater than 0.01 % bwoc, preferably equal to or greater than 0.05 % bwoc, more preferably equal to or greater than 0.1 % bwoc, and even more preferably equal to or greater than 0.2 % bwoc. Preferably the anionically- and hydrophobically-modified (hydroxy)alkyl cellulose ether is present in an amount of from equal to or less than 3 % bwoc, preferably equal to or less than 2 % bwoc, more preferably equal to or less than 1 % bwoc, even more preferably equal to or less than 0.5 % bwoc, and even more preferably equal to or less than 0.25 % bwoc. Preferred anionically- and hydrophobically- modified (hydroxy)alkyl cellulose ethers have (i) one or more substituents selected from the group consisting of methyl, hydroxyethyl or hydroxypropyl, (ii) one or more hydrophobic substituents, and (iii) one or more anionic substituents.

Cellulose ethers suitable for preparing the anionically- and hydrophobically-modified (hydroxy)alkyl cellulose ether of the present invention include hydroxyethyl cellulose, hydroxypropyl cellulose, hydroxyethyl/hydroxypropyl cellulose, methyl cellulose, hydroxypropyl methyl cellulose or hydroxyethyl methyl cellulose. Preferred cellulose ethers include hydroxyethyl cellulose and hydroxyethyl methyl cellulose. The most preferred cellulose ethers suitable for preparing the cellulose ethers of the present invention comprise hydroxyethyl groups.

The amount of the methyl, hydroxyethyl or hydroxypropyl groups is not very critical as long as there is a sufficient level to assure that the cellulose ether is water-soluble. The hydroxyethyl molar substitution EO MS (ethylene oxide molar substitution) of the polymers prepared from hydroxyethyl cellulose is determined either by simple mass gain or using the Morgan modification of the Zeisel method: P. W. Morgan, Ind. Eng. Chem., Anal. Ed., 18, 500 - 504 (1946). The procedure is also described in ASTM method D-2364. The EO MS of the cellulose ether of the present invention generally is from 0.5 to 3.5, preferably from 1.5 to 3.5, more preferably from 1.6 to 2.5, most preferably from 1.9 to 2.5.

The cellulose ether used in the cementing composition of the present invention is further substituted with one or more hydrophobic substituents, preferably with acyclic or cyclic, saturated or unsaturated, branched or linear hydrocarbon groups, such as an alkyl, alkylaryl or arylalkyl group having at least 8 carbon atoms, generally from 8 to 32 carbon atoms, preferably from 10 to 30 carbon atoms, more preferably from 12 to 24 carbon atoms, and most preferably from 12 to 18 carbon atoms. As used herein the terms "arylalkyl group" and "alkylaryl group" mean groups containing both aromatic and aliphatic structures. The most preferred aliphatic hydrophobic substituent is the hexadecyl group, which is most preferably straight-chained. The hydrophobic substituent is non-ionic.

The average number of mole of the hydrophobic substituent(s) per mole of anhydroglucose unit is designated as hydrophobe DS (hydrophobe degree of substitution). The hydrophobe DS is measured using the Morgan modification of the Zeisel method as described above, but using a gas chromatograph to measure the concentration of cleaved alkyl groups. In the case of alkylaryl hydrophobes such as dodecylphenyl glycidyl ether, the spectrophotometric method described in USP 6,372,901 can be used to determine the hydrophobe DS. The hydrophobe DS is generally equal to or greater than 0.001, preferably equal to or greater than 0.0018, more preferably equal to or greater than 0.0027, and even more preferably equal to or greater than 0.0058 mole of the hydrophobic substituent(s), per mole of anhydroglucose unit. The average substitution level of the hydrophobic substituent(s) is equal to or less than 0.025, preferably equal to or less than 0.018, more preferably equal to or less than 0.015, and even more preferably equal to or less than 0.012 mole of the hydrophobic substituent(s), per mole of anhydroglucose unit. Examples of such ranges include, but are not limited to, 0.001 to 0.012; 0.001 to 0.015; 0.001 to 0.018; 0.001 to 0.025; 0.0018 to 0.012; 0.0018 to 0.015; 0.0018 to 0.018; 0.0018 to 0.025; 0.0027 to 0.012; 0.0027 to 0.015; 0.0027 to 0.018; 0.0027 to 0.025; and 0.0058 to 0.012; 0.0058 to 0.015; 0.0058 to 0.018; 0.0058 to 0.025.

With increasing hydrophobe substitution, a point is reached at which the resulting cellulose ether is water-insoluble. However, if the point of water-insolubility due to hydrophobe substitution is exceeded, further modification of the cellulose ether with ionic functionality such as cationic or anionic groups will render the cellulose ether soluble in water ("re-solubilize" the cellulose ether) without adversely affecting the desired elevated temperature rheology and reduction in thermal thinning behavior. This upper limit varies depending on the specific hydrophobe used, the molecular weight of the cellulosic backbone, and the method in which the hydrophobe is added. More than one type of hydrophobic substituent can be substituted onto the cellulose ether, but the total substitution level is preferably within the ranges set forth above.

Preferred anionic groups are represented by formula I 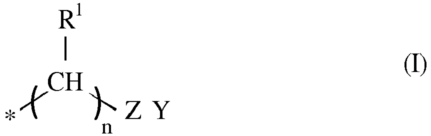
wherein n is 1, 2, 3, or 4,
R¹ is either H or OH,
Z is an anionic functionality, preferably CO₂-, SO₃-, C₆H₄SO₃-, SO₄-, or PO₄-, and
Y is the cationic counterion to the anionic group, preferably Na⁺, Li⁺, K⁺, NH₄⁺, Ca⁺² or Mg⁺².

Other preferred anionic groups are represented by formula II 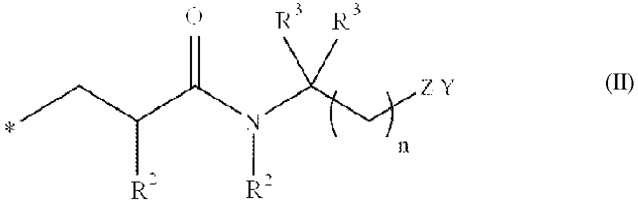
wherein n is 1, 2, 3, or 4,
R² is either H or CH₃,
R³ is either H or CH₃ or CH₂CH₃,
Z is an anionic functionality, preferably CO₂-, SO₃-, C₆H₄SO₃-, SO₄-, or PO₄-, and
Y is the cationic counterion to the anionic group, preferably Na⁺, Li⁺, K⁺, NH₄⁺, Ca⁺² or Mg⁺².

The cellulose ether of the present invention is generally water-soluble. As used herein, the term "water-soluble" means that at least 0.1 gram, and preferably at least 0.2 grams of the cellulose ether is soluble in 100 grams of distilled water at 25°C and 1 atmosphere. The extent of water-solubility can be varied by adjusting the extent of ether substitution on the cellulose ether and the number of anhydroglucose repeat units. Techniques for varying the water solubility of cellulose ethers are known to those skilled in the art.

The cellulose ether of the present invention can be substituted with one or more anionic substituents. Preferred anionic substituents include the carboxymethyl, carboxyethyl, sulfo-C₁₋₆-alkyl groups, such as sulfoethyl, sulfopropyl, sulfobutyl, sulfophenyl ethyl groups and (meth)acrylamidoalkyl sulfonates wherein the alkyl group preferably has 1 to 8, more preferably 1 to 6, and most preferably 1 to 4 carbon atoms. Preferably the anionic substituents degree of substitution is from 0.001 to 1 mole of the hydrophobic substituent(s), per mole of anhydroglucose unit. Preferably the anionic substituents degree of substitution is equal to or greater than 0.001, more preferably equal to or greater than 0.005, more preferably equal to or greater than 0.01, and even more preferably equal to or greater than 0.02 mole of the anionic substituent(s), per mole of anhydroglucose unit. Preferably the anionic substituents degree of substitution is equal to or less than 1, more preferably equal to or less than 0.75, more preferably equal to or less than 0.5, and even more preferably equal to or less than 0.25 mole of the anionic substituent(s), per mole of anhydroglucose unit. Examples of such ranges include, but are not limited to, 0.001 to 0.25; 0.001 to 0.5; 0.001 to 0.75; 0.001 to 1; 0.005 to 0.25; 0.005 to 0.5; 0.005 to 0.75; 0.005 to 1; 0.01 to 0.25; 0.01 to 0.5; 0.01 to 0.75; 0.01 to 1; 0.02 to 0.25; 0.02 to 0.5; 0.02 to 0.75; 0.02 to 1. The carboxymethyl or carboxyethyl DS is determined by non-aqueous titration as described in ASTM method D-1439. The sulfo-C₁₋₆-alkyl, such as sulfoethyl or sulfopropyl DS is determined by elemental sulfur analysis.

The cellulose ether of the present invention can have a range of weight-average molecular weights (M_{w}). For example, the cellulose ether of the cementing composition can have a M_{w} of 100,000 to 4,000,000 Daltons. Preferably the cellulose ether has a weight-average molecular weight of equal to or greater than 500,000 Daltons, preferably equal to or greater than 1,000,000 Daltons, and more preferably equal to or greater than 1,500,000 Daltons. Preferably cellulose has a weight-average molecular weight of equal to or less than 4,000,000 Daltons, preferably equal to or less than 3,000,000 Daltons, and more preferably equal to or less than 2,500,000 Daltons. Examples of such M_{w} ranges include, but are not limited to, 100,000 to 3,000,000 Daltons; 100,000 to 2,500,000 Daltons; 500,000 to 3,000,000 Daltons; 500,000 to 2,500,000 Daltons; 1,000,000 to 2,500,000 Daltons; 1,000,000 to 3,000,000 Daltons; 1,000,000 to 4,000,000 Daltons; 1,500,000 to 2,500,000 Daltons; 1,500,000 to 3,000,000 Daltons; or 1,500,000 to 4,000,000 Daltons. The weight average molecular weight is measured by size-exclusion chromatography (SEC).

The cellulose ethers of the present invention can be produced in two ways:
According to a first method, the cellulose ethers of the present invention can be produced by reacting a cellulose ether having one or more substituents selected from the group consisting of methyl, hydroxyethyl, and hydroxypropyl with
(a) a compound having a hydrophobic substituent, for example a glycidyl ether, an alpha-olefin epoxide, or a halide having an acyclic or cyclic, saturated or unsaturated, branched or linear hydrocarbon group, such as an alkyl, alkylaryl or arylalkyl group having at least 8 carbon atoms; and
(b) an agent providing an anionic substituent, preferably selected from the group consisting of (b1) and (b2) below:
   (b1) a compound of the formula III

      R⁴Z Y (III)

      wherein
      Z is an anionic functionality, preferably CO₂-, SO₃-, C₆H₄SO₃-, SO₄-, or PO₄-, and
      R⁴ is 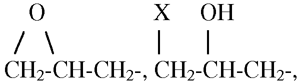 CH₂=CH-, X-CH₂-, X-CH₂CH₂-, X-CH₂CH₂CH₂-, CH₂=CR⁵-CO-NR⁵-C(R⁶)₂-(CH₂)ₙ- wherein R⁵ is H or CH₃, R⁶ is H or CH₃ or CH₂CH₃, and n = 1, 2, 3, or 4 or X-CH₂CH₂CH₂CH₂- wherein X is halide, preferably bromide or chloride, and
      Y is the cationic counterion to the anionic group, preferably Na⁺, Li⁺, K⁺, NH₄⁺, Ca⁺² or Mg⁺², or
   (b2) a compound of the formula IV 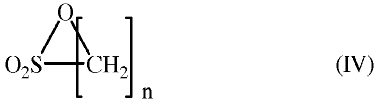 wherein n is 2, 3, 4 or 5.

The compounds (a) and (b) can be reacted with the cellulose ether in any order. That is, the compound (a) can be reacted with the cellulose ether prior to, subsequent to, or simultaneously with the compound (b) in a known manner. Preferably, the reaction is carried out as described in USP 5,407,919 and in International Patent Application WO 2005/000903 while adapting the molar ratio between the cellulose ether and the compounds (a) and (b) to the desired substitution levels. Preferably, the molar ratio between the compound (a) and the anhydroglucose units of the cellulose ether is from 0.01 to 0.5, more preferably from 0.02 to 0.4, more preferably from 0.04 to 0.3, more preferably from 0.05 to 0.25, more preferably from 0.06 to 0.2, and even more preferably from 0.08 to 0.15. Preferably, the molar ratio between the compound (b) and the anhydroglucose units of the cellulose ether is from 0.01 to 1.5, more preferably from 0.02 to 1.25, and even more preferably from 0.05 to 1.

According to a second method, cellulose is reacted with alkali metal hydroxide to prepare alkali cellulose and the produced alkali cellulose is reacted with i) an etherifying agent providing a methyl, hydroxyethyl, or hydroxypropyl substituent, preferably methyl chloride, ethylene oxide, or propylene oxide or a combination thereof, ii) with a compound (a) having a hydrophobic substituent and iii) with a compound (b) providing an anionic substituent in sequence or simultaneously.

Many hydrophobe-containing reagents suitable as compounds (a) are commercially available. In addition, methods for preparing such hydrophobe-containing reagents, as well as methods for derivatizing cellulose ethers to comprise such hydrophobic substituents, are known to those skilled in the art. Note for example, USP 4,228,277; 4,663,159; and 4,845,175.

Preferred hydrophobic substituents include those derived from hydrophobe-containing reagents comprising acyclic or cyclic, saturated or unsaturated, branched or linear hydrocarbon groups having at least 8 carbon atoms, preferably those described further above. The hydrophobe-containing reagent can be attached to the cellulose or to the cellulose ether having one or more substituents selected from the group consisting of methyl, hydroxyethyl and hydroxypropyl via an ether, ester or urethane linkage. Preferred is the ether linkage. Preferred are glycidyl ethers, such as nonylphenyl glycidyl ether, dodecylphenyl glycidyl ether, 3-n-pentadecenylphenyl glycidyl ether, hexadecyl glycidyl ether, octadecyl glycidyl ether, or docosyl glycidyl ether; or alpha-olefin epoxides, such as 1,2-epoxy hexadecane, 1,2-epoxy octadecane, and their respective chlorohydrins, or alkyl halides, such as octyl bromide, decyl bromide, dodecyl bromide, tetradecyl bromide, hexadecyl bromide, octadecyl bromide, eicosyl bromide; and mixtures thereof.

According to the first method, a cellulose ether having one or more substituents selected from the group consisting of methyl, hydroxyethyl and hydroxypropyl is typically first reacted with an alkali metal hydroxide and then with a hydrophobe-containing reagent (a) and a compound (b) providing an anionic substituent. The first method is described hereafter in detail using hydroxyethyl cellulose as an example of a cellulose ether having one or more substituents selected from the group consisting of methyl, hydroxyethyl and hydroxypropyl, although the procedure is not limited to hydroxyethyl cellulose. Preferably a slurry is prepared of hydroxyethyl cellulose, in a diluent, preferably an organic solvent such as methanol, ethanol, *n*-propyl alcohol, isopropyl alcohol, *sec-*butyl alcohol, *t*-butyl alcohol, tetrahydrofuran, 1,4-dioxane, dimethyl ether, toluene, cyclohexane, cyclohexanone, or methyl ethyl ketone. The diluent optionally comprises water. The water content of the diluent is typically from 0 to 25 percent, by weight. Preferably a hydroxyethyl cellulose is used which has an EO MS of from 0.5 to 3.5, more preferably from 1.5 to 3.5, most preferably from 1.6 to 2.5, measured as further described herein above. The weight ratio of the diluent to hydroxyethyl cellulose is preferably from 3 to 20, more preferably from 5 to 10. The slurry of the hydroxyethyl cellulose is contacted with an alkali metal hydroxide, such as sodium hydroxide or potassium hydroxide, preferably with an alkali metal hydroxide in aqueous solution, preferably with a 15 to 50 weight percent sodium hydroxide solution, particularly preferably with a 20 to 50 weight percent sodium hydroxide solution. Generally from 0.1 to 1.5, preferably from 0.3 to 1.0 mole of alkali metal hydroxide are utilized, per mole of anhydroglucose unit of the hydroxyethyl cellulose. Generally the alkalization is carried out at a temperature of 10 to 40°C, preferably from 20 to 30°C, and for 15 to 60 minutes, preferably from 25 to 45 minutes. Subsequently the alkalized hydroxyethyl cellulose is reacted with a hydrophobe-containing reagent (a) and with compound b) described further above. Preferably from 0.01 to 0.5, more preferably from 0.04 to 0.3, more preferably 0.08 to 0.15 mole of hydrophobe-containing reagent (a) are utilized, per mole of anhydroglucose unit of the hydroxyethyl cellulose. Generally the reaction with the hydrophobe-containing reagent is carried out at a temperature of from 50°C to 120°C, preferably from 70°C to 85°C, and for 120 to 600 minutes, preferably from 180 to 300 minutes. Preferably from 0.01 to 1.5, more preferably from 0.03 to 1.25, and more preferably from 0.05 to 1 mole of compound b) are utilized, per mole of anhydroglucose unit of the hydroxyethyl cellulose. Generally the reaction with compound b) is carried out at a temperature of 50°C to 120°C, preferably from 70°C to 80°C, and for 120 to 600 minutes, preferably from 180 to 300 minutes.

According to the second method cellulose is reacted with an alkali metal hydroxide to prepare alkali cellulose; and the intermediate alkali cellulose is reacted with i) an etherifying agent providing a methyl, hydroxyethyl, or hydroxypropyl substituent, preferably methyl chloride, ethylene oxide, or propylene oxide or a combination thereof, more preferably with ethylene oxide, and with a hydrophobe-containing reagent (a) and with a compound (b) providing an anionic substituent, preferably with a formula III or IV, in sequence or simultaneously.

Preferably a slurry is prepared of cellulose in a diluent, preferably an organic solvent such as methanol, ethanol, *n*-propyl alcohol, isopropyl alcohol, *sec*-butyl alcohol, *t*-butyl alcohol, tetrahydrofuran, 1,4-dioxane, dimethyl ether, toluene, cyclohexane, cyclohexanone, or methyl ethyl ketone. The diluent optionally comprises water. The water content of the diluent is typically from 0 to 25 percent by weight. The weight ratio of the diluent to cellulose is preferably from 3 to 30, more preferably from 10 to 20. The slurry of the cellulose is contacted with an alkali metal hydroxide, such as sodium hydroxide or potassium hydroxide, preferably with an alkali metal hydroxide in aqueous solution, preferably with a 15 to 50 weight percent sodium hydroxide solution, particularly preferably with a 20 to 50 weight percent sodium hydroxide solution. Generally from 0.2 to 2.0, preferably from 1.0 to 1.5 mole of alkali metal hydroxide are utilized, per mole of anhydroglucose unit of the cellulose. Generally the alkalization is carried out at a temperature of 10°C to 40°C, preferably from 20°C to 30°C, and for 15 to 60 minutes, preferably from 25 to 45 minutes. Subsequently the alkalized cellulose is reacted with an etherifying agent providing a methyl, hydroxyethyl, or hydroxypropyl substituent, preferably methyl chloride, ethylene oxide, or propylene oxide or a combination thereof, more preferably ethylene oxide. Preferably from 2 to 8, more preferably from 4 to 6 mole of the etherifying agent, such as ethylene oxide are utilized, per mole of anhydroglucose unit of the cellulose. Generally the reaction with the etherifying agent, such as ethylene oxide is carried out at a temperature of 40°C to 120°C, preferably from 70°C to 85°C, and for 30 to 180 minutes, preferably from 60 to 120 minutes. Although the entire amount of the etherifying agent, such as ethylene oxide can be added to alkali cellulose in one stage, it can be added in two stages, with an intermittent adjustment in the caustic concentration if desired. Most preferably a partial neutralization of the slurry with an acid, such as acetic acid, formic acid, nitric acid, hydrochloric acid, phosphoric acid, or lactic acid is conducted prior to the addition of the hydrophobe-containing reagent (a). Generally sufficient acid is added to adjust the caustic concentration of the slurry to 0.10 to 1.00 mole, more preferably from 0.30 to 0.70 mole of alkali metal hydroxide per mole of anhydroglucose unit of the cellulose. The hydrophobe-containing reagent reacts much slower with the alkali cellulose than the etherifying agent, such as ethylene oxide. The hydrophobe-containing reagent can be added to the alkali cellulose simultaneously with the etherifying agent, such as ethylene oxide, but preferably the hydrophobe-containing reagent is added only after the reaction with the etherifying agent, such as ethylene oxide is complete. Preferably from 0.01 to 2.0, more preferably from 0.1 to 1.0 mole of hydrophobe-containing reagent are utilized, per mole of anhydroglucose unit of the cellulose. Generally the reaction with the hydrophobe-containing reagent is carried out at a temperature of 50°C to 120°C, preferably from 75°C to 85°C, and for 120 to 600 minutes, preferably from 180 to 300 minutes. The compound of formula III or IV can be added simultaneously with the hydrophobe-containing reagent, but preferably the compound of formula III or IV is added after the hydrophobe reaction is complete. Preferably from 0.05 to 1.5, more preferably from 0.05 to 0.9 mole of compound of formula III or IV are utilized, per mole of anhydroglucose unit of the cellulose. Generally the reaction with compound (b) is carried out at a temperature of 50°C to 120°C, preferably from 75°C to 85°C, and for 120 to 600 minutes, preferably from 180 to 300 minutes.

Compounds (a) and (b) can be added to the alkali cellulose simultaneously with the ethylene oxide, but preferably compounds (a) and (b) are only added after the ethylene oxide. The mole of compounds (a) and (b) per mole of anhydroglucose unit of the cellulose, the reaction temperatures and the reaction times are preferably those described above for the first method of production.

After completion of the reaction according to the first or second method, the reaction mixture can be processed in a known manner, such as neutralization of residual alkali with a suitable acid such as acetic acid, formic acid, hydrochloric acid, lactic acid, nitric acid, or phosphoric acid, recovering the product, washing it with an inert diluent to remove unwanted by-products, and drying the product.

The anionically and hydrophobically-modified polymers of the present invention are useful in a variety of applications for modifying the properties of fluids, in particular useful for cementing boreholes in water, petroleum and natural gas recovery. The cementing composition of the present invention comprising an anionically and hydrophobically-modified polymer is particularly useful in situations where the operation or product will be exposed to elevated temperatures; for example for uses where the temperature is at least 87.8°C (190°F) more preferably at least 121.1°C (250°F).

The cementing composition of the present invention further comprises (iii) a dispersant. By "dispersant" we mean to include an anionic surfactant, that is, a compound which contains a hydrophobic (for example, any hydrocarbon substituent, such as alkyl, aryl or alkaryl group) portion and a hydrophilic (for example, any negatively-charged moiety, such as O-, CO₂-, SO₃-, and/or OSO₃-) portion. The term dispersant is also meant to include those chemicals that also function as a plasticizer, high range water reducer, fluidizer, antiflocculating agent, or superplasticizer for cement compositions. Examples of suitable dispersants are lignosulfonates, beta naphthalene sulfonates, sulfonated melamine formaldehyde condensates, polyaspartates, or naphthalene sulfonate formaldehyde condensate resins.

Other suitable dispersants are branched and non-branched polycarboxylate polymers. Polycarboxylate polymers (referred to also as polyacrylate polymers) are polymers having a carbon backbone with pendant side chains, wherein at least a portion of the side chains are attached to the backbone through a carboxyl group or an ether group. Examples of polycarboxylate dispersants can be found in USP 7,815,731 (and patents incorporated therein) which is incorporated by reference herein in its entirety.

Preferable dispersants are sulfonic acid derivatives of aromatic or aliphatic hydrocarbons, such as naphthalene sulfonic acid formaldehyde condensation product derivatives, such as their sodium or potassium salts. Especially preferred are polynaphthalene sulfonate resins (or salts thereof), especially those with a narrow molecular weight distribution and sodium or potassium naphthalene sulfonate formaldehyde condensation products. Examples include sulfonated melamine formaldehyde condensates, melamine formaldehyde condensates, sulfonated naphthalene formaldehyde condensates, sodium or potassium salts of a sulfonated naphthalene formaldehyde condensates, polynaphthalene sulfonates, sulfonated polyacrylamides, sulfonated styrene/maleic anhydride copolymers, see USP 7,422,061 which is incorporated herein in its entirety.

A preferred dispersing agent is a water soluble polymer prepared by the caustic catalyzed condensation of a ketone, an aldehyde and sodium sulfite. A preferred dispersing agent is commercially available from Halliburton under the trade designation CFR-3™, see USP 5,779,787 which is incorporated by reference herein in its entirety. Other preferred dispersants that can be used include polynaphthalene sulfonates available from Dow Chemical Company, such as "TIC I"; calcium lignosulfonates; sodium naphthalene sulfonate formaldehyde condensation products, such as DAXAD™ 19 and DAXAD 11 KLS both of W. R. Grace Company, LOMAR™ D of Geo Specialty Chemicals, D 31 of BJ Services Company, D 65 of Dowell Company, and LIQUIMENT™ of BASF.

The dispersant is present in an amount of from 0.01 % bwoc to 3 % bwoc. The dispersant is present in an amount equal to or greater than 0.01 % bwoc, preferably equal to or greater than 0.05 % bwoc, more preferably equal to or greater than 0.1 % bwoc, more preferably equal to or greater than 0.5 % bwoc, and even more preferably equal to or greater than 0.7 % bwoc. The dispersant is present in an amount equal to or less than 3 % bwoc, preferably equal to or less than 2 % bwoc, more preferably equal to or less than 1.5 % bwoc, and even more preferably equal to or less than 1 % bwoc.

The cementing composition of the present invention may further comprise (iv) one or more other additives conventionally added to cement compositions useful in cementing casings in the borehole of a well in the amounts normally used. These additives can include, for example, cement accelerators, such as calcium chloride, sodium chloride, gypsum, sodium silicate and sea water; light-weight additives, such as bentonite, diatomaceous earth, coal, perlite and pozzolan; heavy-weight additives, such as hematite, ilmenite, barite, silica flour, and sand; cement retarders, such as lignins, sodium or calcium lignosulfonates, CMHEC (carboxymethylhydroxyethylcellulose ether) and sodium chloride; additives for controlling lost circulation, such as gilsonite, walnut hulls, cellophane flakes, gypsum cement, bentonite-diesel oil and fibers; filtration control additives, such as cellulose dispersants, CMHEC and latex; antifoaming agents, such as FP-L6 from BJ Services Company; surfactants; formation conditioning agents; and expanding additives.

The aqueous cementing compositions of the present invention may be prepared according to conventional means as are well known in the art. At a minimum, the slurries include water, cement, an anionically- and hydrophobically-modified polymer, and a dispersant. One or more of the cement, anionically- and hydrophobically-modified polymer, and dispersant may be pre-mixed and added together or may be added separately in any order to the slurry. For example, they may be added to the cement by dry mixing and then added to the water or alternatively, by a continuous process where the additives and water are concurrently added to the cement. Alternatively, the one or more additives may be pre-mixed with the cement then mixed with the water, then one or more of the additives added directly to the slurry. In some embodiments, it is contemplated that the anionically- and hydrophobically-modified polymer and dispersant may be provided to the cement slurry separately, i.e., not in blended form.

In a preferred embodiment, the aqueous cementing composition of the present invention is made by dry blending the hydraulic cement, anionically- and hydrophobically-modified polymer, dispersant, and optionally one or more other additives to form a dry blend cementing composition which is then added to water or the water added to it and mixed prior to pumping down the borehole or the dry blend cementing composition is added directly to the water as it is being pumped down the borehole. Preferably, the dispersant is added to the water or the slurry prior to the addition of the anionically- and hydrophobically-modified polymer. This is most readily achieved by adding water and dispersant prior to adding to the cement. Alternatively, the solids (except for the anionically- and hydrophobically-modified polymer) may be dry mixed, added to the water (or water added to them) combined with the anionically- and hydrophobically-modified polymer and then mixed further to form an aqueous cementing composition of the present invention.

The aqueous cementing compositions of the present invention are generally prepared to have a density of from about 5 to about 30 pounds per gallon.

For acceptable pumpability, the aqueous cementing compositions of the present invention preferably have a plastic viscosity (PV) at use temperatures (100 °F = 37.8°C), e.g., 60°F to 90°F, preferably determined at 80°F, of from 50 to 300 as determined using a Fann Viscometer.

For adequate performance in the borehole, the aqueous cementing compositions of the present invention preferably have a 190°F conditioned yield point (YP) as determined using a Fann Viscometer of between 10 and 100. If the YP is too low, the aqueous cementing composition is too thin and phase separation and/or fluid loss may occur. If the YP is too high, the aqueous cementing composition may generate too high of pumping pressures and/or fail to properly conform and adhere to uneven surfaces of the well bore.

Preferably, the aqueous cementing compositions have a free fluid loss at 190°F as determined by examination of the slurry in a volumetric flask of less than 2 percent, more preferably a nondetectable loss.

Preferably, the aqueous cementing compositions have a fluid loss at 250°F of equal to or less than 150 mL/30 minutes, more preferably equal to or less than 100 mL/30 minutes when measured as described in Recommended Practice for Testing Well Cements, API Recommended Practice 10B-2, 23rd Edition (2002).

One embodiment of the present invention is a method to cement a borehole of an oil or gas well with the aqueous cementing composition of the present invention. After a borehole of an oil or gas well is drilled, casing is run into the well and is cemented in place by filling the annulus between the borehole wall and the outside of the casing with the cementing composition of the present invention, which is then permitted to set. The resulting cement provides a sheath surrounding the casing that prevents, or inhibits, communication between the various formations penetrated by the well. In addition to isolating oil, gas and water-producing zones, the cement also aids in (1) bonding and supporting the casing, (2) protecting the casing from corrosion, (3) preventing blowouts by quickly forming a seal, (4) protecting the casing from shock loads in drilling deeper and (5) sealing off zones of lost circulation. The usual method of cementing a well is to pump the aqueous cementing composition downwardly through the casing, outwardly through the lower end of the casing and then upwardly into the annulus surrounding the casing. The upward displacement of the aqueous cementing composition through the annulus can continue until some of the aqueous cementing composition returns to the well surface, but in any event will continue past the formations to be isolated.

For example, a preferred method of the present invention is cementing a casing in a borehole of a well comprising suspending the casing in the borehole, pumping downwardly into said casing an aqueous cementing composition comprising (a) water, (b) a cementing composition comprising (i) a hydraulic cement, (ii) an anionically- and hydrophobically-modified (hydroxy)alkyl cellulose ether, and (iii) a dispersant, and optionally (iv) one or more other additives conventionally added to aqueous cementing compositions useful in cementing casings in the borehole of wells, then pumping said aqueous cementing composition upwardly into the annulus surrounding said casing, continuing said pumping until said aqueous composition fills that portion of the annular space desired to be sealed and then maintaining said aqueous cementing composition in place until the cement sets.

The cementing compositions of the present invention are characterized by little or no fluid loss at 250°F, the presence of little or no measureable free water, a viscosity designed for optimum particle suspension, optimum pumpability, especially at elevated wellbore temperature (i.e., at or above 190°F or preferably at or above 250°F), flow properties sufficient to facilitate and maintain laminar and/or plug flow, adequate gel strength to provide thixotropic properties to the slurry when pumping ceases.

The present invention is further illustrated by the following examples which are not to be construed to limit the scope of the present invention. Unless otherwise indicated, all percentages and parts are by weight.

### EXAMPLES

The following examples are given to illustrate, but not limit, the scope of this disclosure. Unless otherwise specified, all instruments and chemicals used are commercially available. 100°F = 37.8 °C.

The following procedure exemplifies a standard procedure for making a hydrophobically modified polymer, an anionically- and hydrophobically-modified polymer, (aqueous) cementing compositions, and measuring the resulting performance properties related to viscosity and fluid loss. In addition, one skilled in the art will appreciate that this is an exemplary procedure and that other components can be substituted or removed in the procedure to make a similar cementing composition.

### Measurement of molecular weight by size-exclusion chromatography (SEC):

The eluent consists of 0.05 weight percent sodium azide (NaN₃) and 0.75 weight percent β-cyclodextrin (β-CD, purchased from Sigma-Aldrich) dissolved in deionized (DI) water. All eluent compositions are prepared by dissolving NaN₃ and β-CD in DI water that has been filtered through a 0.2 µm nylon cartridge. The mobile phase is filtered through a 0.2 µm nylon membrane prior to use.

Sample solutions are prepared in the mobile phase to minimize interference from any salt peak. The target sample concentration is about 0.3 mg/mL in order to be sufficiently below C*, the intermolecular polymer chain overlap concentration. Solutions are slowly shaken on a flat bed shaker for 2-3 hours to dissolve the samples, and then are stored overnight in a refrigerator set at 4°C for complete hydration and dissolution. On the second day, solutions are shaken again for 1-2 hours. All solutions are filtered through a 0.45 µm nylon syringe filter prior to injection.

Pump: Waters 2690 set at 0.5 mL/min flow rate and equipped with a filter that consists of two layers of 0.2 µm nylon membrane installed upstream of the injection valve.
Injection: Waters 2690 programmed to inject 100 microliters of solution.
Columns: Two TSK-GEL GMPW columns (7.5mm ID x 30 cm, 17µm particles, 100Å to 1000Å pores nominal) are operated at 30°C.
Detector: A Waters DRI detector 2410 is operated at 30°C.

The conventional SEC calibration is determined using 11 narrow polyethylene oxide (PEO) standards (linear, narrow molecular weight PEO standards are purchased from TOSOH, Montgomeryville, Pennsylvania). The calibration curve is fit to a first order polynomial over the range of 879 kg/mol to 1.47 kg/mol.

Data is acquired and reduced using Cirrus SEC software version 2.0.

The following materials are used: Deionized water; Sodium hydroxide (Pellets/Certified ACS, Fisher Scientific); CELLOSIZE™ HEC QP-52,000H hydroxyethyl cellulose (The Dow Chemical Company); Isopropyl alcohol (reagent grade, VWR); Nitrogen (Ultra High Purity Grade, Airgas); 1-Bromohexadecane (n-C₁₆H₃₃Br, Sigma-Aldrich); Glacial acetic acid (99.99 percent, Sigma-Aldrich); Acetone (Certified ACS, Fisher Scientific); Aqueous glyoxal (40 weight percent in H₂O, Sigma-Aldrich); Sodium azide (NaN₃, Sigma-Aldrich); and sodium 2-acrylamido-2-methyl-1-propanesulfonate (NaAMPS, Sigma-Aldrich).

"Polymer 1" is a hydrophobically-modified hydroxyethyl cellulose prepared by the following method: A 3000 mL three-necked round bottomed flask is fitted with a mechanical stirring paddle, a nitrogen inlet, a rubber serum cap, and a reflux condenser connected to a mineral oil bubbler. The resin kettle is charged with 199.94 g (184.46 g contained) of CELLOSIZE HEC QP-52,000H hydroxyethyl cellulose, 1056 g of isopropyl alcohol, and 144 g of deionized water. While stirring the mixture, the resin kettle is purged with nitrogen for one hour to remove any entrained oxygen in the system. While stirring under nitrogen, 24.79 g of 50 weight percent aqueous sodium hydroxide solution are added drop-wise over five minutes using a syringe. The mixture is allowed to stir for 30 minutes under nitrogen.

The mixture is heated to reflux with stirring under nitrogen. At reflux, 22.53 g of 1-bromohexadecane are slowly added over 5 minutes. The mixture is held at reflux for 4.5 hours with stirring under nitrogen. The mixture is cooled to room temperature and neutralized by adding 31.0 g of glacial acetic acid and stirred for 10 minutes. The polymer is recovered by vacuum filtration and washed in a Waring blender: four times with 1500 mL of 4:1 (by volume) of acetone/water and twice with 1500 mL of pure acetone. The polymer is treated by adding 2.5 g of 40 percent aqueous glyoxal and 1.5 g of glacial acetic acid to the last acetone desiccation. The polymer is dried *in vacuo* at 50°C overnight, yielding 192.81 g of an off-white powder with a volatiles content of 6.00 weight percent and an ash content (as sodium acetate) of 2.58 weight percent. The polymer M_{w} is found to be about 1,400,000 Daltons and the hydrophobe degree of substitution (DS) (by Zeisel analysis) is found to be 0.0058.

"Polymer 2" is an anionically- and hydrophobically-modified hydroxyethyl cellulose prepared by the following method: A 1000 mL three-necked round bottomed flask is fitted with a mechanical stirring paddle, a nitrogen inlet, a rubber serum cap, and a reflux condenser connected to a mineral oil bubbler. The resin kettle is charged with 45.94 g (42.00 g contained) of hydrophobe-modified hydroxyethyl cellulose described above (Example 1), 267 g of isopropyl alcohol, and 40 g of distilled water. While stirring the mixture, the resin kettle is purged with nitrogen for one hour to remove any entrained oxygen in the system. While stirring under nitrogen, 10.08 g of 25.21 percent aqueous sodium hydroxide solution are added drop-wise over five minutes using a syringe. The mixture is then allowed to stir for 30 minutes under nitrogen. Then, 1.741 g of sodium 2-acrylamido-2-methyl-1-propanesulfonate (NaAMPS) are added, and the resulting mixture stirred for 5 minutes.

The mixture is heated to reflux with stirring and held at reflux for 4.5 hours under nitrogen. The mixture is then cooled to room temperature and neutralized by adding 5.00 g of glacial acetic acid and stirring for 10 minutes. The polymer is recovered by vacuum filtration and washed in a Waring blender: four times with 400 mL of 4:1 (by volume) of acetone/water and twice with 400 mL of pure acetone. The polymer is glyoxal-treated by adding 0.80 g of 40 percent aqueous glyoxal and 0.50 g of glacial acetic acid to the last acetone desiccation. The polymer is dried *in vacuo* at 50°C overnight, yielding 41.968 g of an off-white powder with a volatiles content of 2.46% and an ash content (as sodium acetate) of 2.47%. The AMPS DS is found to be 0.024 (% S = 0.286%) by elemental analysis.

"Polymer 3" is an anionically- and hydrophobically-modified hydroxyethyl cellulose prepared by the following method: A 500 mL three-necked round bottomed flask is fitted with a mechanical stirring paddle, a nitrogen inlet, a rubber serum cap, and a reflux condenser connected to a mineral oil bubbler. The resin kettle is charged with 21.88 g (20.00 g contained) of hydrophobe-modified hydroxyethyl cellulose described above (Example 1), 126 g of isopropyl alcohol, and 19 g of distilled water. While stirring the mixture, the resin kettle is purged with nitrogen for one hour to remove any entrained oxygen in the system. While stirring under nitrogen, 4.8 g of 25.21 weight percent aqueous sodium hydroxide solution are added drop-wise over five minutes using a syringe. The mixture is then allowed to stir for 30 minutes under nitrogen. Then, 8.29 g of sodium 2-acrylamido-2-methyl-1-propanesulfonate (NaAMPS) are added, and the resulting mixture stirred for 5 minutes.

The mixture is heated to reflux with stirring and held at reflux for 4.5 hours under nitrogen. The mixture is then cooled to room temperature and neutralized by adding 5.00 g of glacial acetic acid and stirring for 10 minutes. The polymer is recovered by vacuum filtration and washed in a Waring blender: four times with 250 mL of 4:1 (by volume) of acetone/water and twice with 250 mL of pure acetone. The polymer is glyoxal-treated by adding 0.40 g of 40 percent aqueous glyoxal and 0.25 g of glacial acetic acid to the last acetone desiccation. The polymer is dried *in vacuo* at 50°C overnight, yielding 21.681 g of an off-white powder with a volatiles content of 2.85% and an ash content (as sodium acetate) of 6.29%. The AMPS DS is found to be 0.214 (% S = 2.10%) by elemental analysis.

"Polymer 4" is a hydroxyethyl cellulose with a M_{w} of about 1,400,000 Daltons available as CELLOSIZE HEC QP-52000H from The Dow Chemical Company.

Cementing compositions Examples 1 to 6 are prepared according to API RP 10A: The following materials are used in making the cementing compositions used to make Examples 1 to 8: 630 grams (g) of Class H, Texas Lehigh Portland cement, 35 % bwoc silica sand, polymer, optional dispersant available as LIQUIMENT from BASF, 0.01 % bwoc of an alcohol based antifoaming compound FP-6L available from BJ Services Company, and 0.7 % bwoc of a sodium lignosulfonate retarder KELIG™ 32 available from Borregaard LignoTech. The type of polymer and amount of dispersant is listed in Table 1. The powders are dry mixed for 15 sec at low shear (4,000 rpm) and then for 35 sec at high shear (12,000 rpm). Then 50 % bwoc tap water is added to the dry mixed cementing compositions. Example 1 does not have a dispersant. For Examples 1 to 6, all powders are dry blended together prior to adding water. The powders are dry mixed for 15 sec at low shear (4,000 rpm) and then for 35 sec at high shear (12,000 rpm). Then 50 % bwoc tap water is added to the dry mixed cementing compositions.

The compositions of the aqueous cementing compositions are described in Table 1 and amounts are given in weight percent based on the weight of the cement (% bwoc).

The following properties are determined for aqueous cementing compositions and their values are reported in Table 1:
"PV" and "YP" are plastic viscosity and yield point and are determined as follows: PV is the Fann Viscometer dial reading at 300 rotations per minute (rpm) minus the dial reading at 100 rpm and the difference multiplied by 1.5; YP is the Fann Viscometer dial reading at 300 rpm minus the PV, according to API RP 13B-1. Values are determined at 80°F and then after conditioning at 190°F for 20 minutes;
"Free Fluid" is determined at 190°F according to Recommended Practice for Testing Well Cements, API Recommended Practice 10A, 23rd Edition (2002); and
"Fluid Loss" is determined at 250°F according to Recommended Practice for Testing Well Cements, API Recommended Practice 10B-2, 23rd Edition (2002).

**Table 1**

| Example | Polymer | Polymer, % bwoc | Dispersant, % bwoc | Cement, g | Water, % bwoc | Initial PV/YP @ 80°F | Conditioned PV/YP @ 190°F | Free Fluid @ 190°F | Fluid Loss @ 250°F |
|---|---|---|---|---|---|---|---|---|---|
| 1* | 1 | 0.2 | 0.8 | 630 | 50 | n.m. | 125/28 | trace | 74 |
| 2* | 1 | 0.1 | 0.9 | 630 | 50 | 112/18 | 9/5 | 2.9 | 140 |
| 3 | 2 | 0.21 | 0.8 | 630 | 50 | 189/40 | 82/12 | 0 | 80 |
| 4 | 3 | 0.217 | 0.8 | 630 | 50 | 96/11 | 18/4 | 1.6 | 176 |
| 5* | 2 | 0.542 | 0 | 630 | 50 | n.m. | 338/126 | 0 | 1000+ |
| 6* | 4 | 0.217 | 0.8 | 603 | 50 | 197/38 | 131/11 | 0.4 | 209 |

| | | | | | | | | | |
|---|---|---|---|---|---|---|---|---|---|
| *Not examples or the present invention n.m. = not measured | | | | | | | | | |

## Claims

1. An aqueous cementing composition for cementing a casing in a borehole of a well comprising:
(a) water
and
(b) a cementing composition comprising:
(i) a hydraulic cement,
(ii) an anionically- and hydrophobically-modified (hydroxy)alkyl cellulose ether,
(iii) a dispersant,
and
(iv) optionally one or more other additives conventionally added to aqueous cementing compositions useful in cementing casings in the borehole of wells.

2. A method for cementing a casing in a borehole of a well comprising the use of an aqueous cementing composition comprising:
(a) water
and
(b) a cementing composition comprising:
(i) a hydraulic cement,
(ii) an anionically- and hydrophobically-modified (hydroxy)alkylcellulose ether,
(iii) a dispersant,
and
(iv) optionally one or more other additives conventionally added to aqueous cementing compositions useful in cementing casings in the borehole of wells.

3. The method of Claim 2 wherein the anionically- and hydrophobically-modified (hydroxy)alkyl cellulose ether is an anionically- and hydrophobically-modified hydroxyethyl cellulose.

4. The method of Claim 3 wherein the anionically- and hydrophobically-modified hydroxyethyl cellulose has an ethylene oxide molar substitution of from 0.5 to 3.5.

5. The method of Claim 3 wherein the anionically- and hydrophobically-modified hydroxyethyl cellulose has a hydrophobe degree of substitution of from 0.001 to 0.025.

6. The method of Claim 2 wherein the anionically- and hydrophobically-modified (hydroxy)alkyl cellulose ether has a weight-average molecular weight of from 100,000 to 4,000,000 Daltons.

7. The method of Claim 3 wherein the anionically- and hydrophobically-modified hydroxyethyl cellulose has an anionic degree of substitution of from 0.001 to 1.

8. The method of Claim 2 wherein the dispersant is a sulfonated polymer, melamine formaldehyde condensate, a naphthalene formaldehyde condensate, a branched polycarboxylate polymer, or non-branched polycarboxylate polymer.

9. The method of Claim 2 wherein the dispersant is a sulfonated melamine formaldehyde condensate, a melamine formaldehyde condensate, a sulfonated naphthalene formaldehyde condensate, a sodium salt of a sulfonated naphthalene formaldehyde condensate, a potassium salt of a sulfonated naphthalene formaldehyde condensate, a polynaphthalene sulfonate, a sulfonated polyacrylamide, a condensate of a ketone, an aldehyde and sodium sulfite, or a sulfonated styrene/maleic anhydride copolymer.

10. The method of Claim 2 wherein the cementing composition comprises one or more additive selected from calcium chloride, sodium chloride, gypsum, sodium silicate, sea water, bentonite, diatomaceous earth, coal, perlite, pozzolan, hematite, ilmenite, barite, silica flour, sand, lignins, sodium lignosulfonates, calcium lignosulfonates, carboxymethylhydroxyethyl-cellulose ether, gilsonite, walnut hulls, cellophane flakes, gypsum cement, bentonite-diesel oil, nylon fibers, or latex.

11. The method of Claim 2 wherein the aqueous cementing composition has an initial PV at 26.7°C (80°F) of equal to or less than 300.

12. The method of Claim 2 wherein the dispersant is added to the water before adding the anionically- and hydrophobically-modified (hydroxy)alkyl cellulose ether.

13. The method of Claim 2 comprising the steps of:
A) pumping downwardly into said casing said aqueous cementing composition,
B) pumping said aqueous cementing composition upwardly into the annulus surrounding said casing,
C) continuing said pumping until said aqueous composition fills that portion of the annular space desired to be sealed,
and
D) maintaining said aqueous cementing composition in place until the cement sets.

## Patentansprüche

1. Eine wässrige Zementierzusammensetzung zum Zementieren einer Verrohrung in einer Bohrung eines Bohrlochs, beinhaltend:
(a) Wasser
und
(b) eine Zementierzusammensetzung, beinhaltend:
(i) einen hydraulischen Zement,
(ii) einen anionisch und hydrophob modifizierten (Hydroxy)alkylcelluloseether,
(iii) ein Dispergiermittel
und
(iv) optional einen oder mehrere andere Zusatzstoffe, die herkömmlicherweise wässrigen Zementierzusammensetzungen zugegeben werden, die beim Zementieren von Verrohrungen in der Bohrung von Bohrlöchern nützlich sind.

2. Ein Verfahren zum Zementieren einer Verrohrung in einer Bohrung eines Bohrlochs, beinhaltend die Verwendung einer wässrigen Zementierzusammensetzung, beinhaltend:
(a) Wasser
und
(b) eine Zementierzusammensetzung, beinhaltend:
(i) einen hydraulischen Zement,
(ii) einen anionisch und hydrophob modifizierten (Hydroxy)alkylcelluloseether,
(iii) ein Dispergiermittel
und
(iv) optional einen oder mehrere andere Zusatzstoffe, die herkömmlicherweise wässrigen Zementierzusammensetzungen zugegeben werden, die beim Zementieren von Verrohrungen in der Bohrung von Bohrlöchern nützlich sind.

3. Verfahren gemäß Anspruch 2, wobei der anionisch und hydrophob modifizierte (Hydroxy)alkylcelluloseether eine anionisch und hydrophob modifizierte Hydroxyethylcellulose ist.

4. Verfahren gemäß Anspruch 3, wobei die anionisch und hydrophob modifizierte Hydroxyethylcellulose eine molare Ethylenoxidsubstitution von 0,5 bis 3,5 aufweist.

5. Verfahren gemäß Anspruch 3, wobei die anionisch und hydrophob modifizierte Hydroxyethylcellulose einen hydrophoben Substitutionsgrad von 0,001 bis 0,025 aufweist.

6. Verfahren gemäß Anspruch 2, wobei der anionisch und hydrophob modifizierte (Hydroxy)alkylcelluloseether ein Molekulargewicht im Gewichtsmittel von 100 000 bis 4 000 000 Dalton aufweist.

7. Verfahren gemäß Anspruch 3, wobei die anionisch und hydrophob modifizierte Hydroxyethylcellulose einen anionischen Substitutionsgrad von 0,001 bis 1 aufweist.

8. Verfahren gemäß Anspruch 2, wobei das Dispergiermittel ein sulfoniertes Polymer, ein Melamin-Formaldehyd-Kondensat, ein Naphthalen-Formaldehyd-Kondensat, ein verzweigtes Polycarboxylatpolymer oder ein nichtverzweigtes Polycarboxylatpolymer ist.

9. Verfahren gemäß Anspruch 2, wobei das Dispergiermittel ein sulfoniertes Melamin-Formaldehyd-Kondensat, ein Melamin-Formaldehyd-Kondensat, ein sulfoniertes Naphthalen-Formaldehyd-Kondensat, ein Natriumsalz eines sulfonierten Naphthalen-Formaldehyd-Kondensats, ein Kaliumsalz eines sulfonierten Naphthalen-Formaldehyd-Kondensats, ein Polynaphthalensulfonat, ein sulfoniertes Polyacrylamid, ein Kondensat eines Ketons, eines Aldehyds und von Natriumsulfit, oder ein sulfoniertes Styrol-Maleinsäureanhydrid-Copolymer ist.

10. Verfahren gemäß Anspruch 2, wobei die Zementierzusammensetzung einen oder mehrere Zusatzstoffe beinhaltet, ausgewählt aus Calciumchlorid, Natriumchlorid, Gips, Natriumsilicat, Meerwasser, Bentonit, Kieselgur, Kohle, Perlit, Puzzolan, Hämatit, Ilmenit, Bariumsulfat, Quarzmehl, Sand, Ligninen, Natriumligninsulfonaten, Calciumligninsulfonaten, Carboxymethylhydroxyethylcelluloseether, Gilsonit, Walnussschalen, Cellophanflocken, Gipszement, Bentonitdieselöl, Nylonfasern oder Latex.

11. Verfahren gemäß Anspruch 2, wobei die wässrige Zementierzusammensetzung eine Anfangs-PV bei 26,7 °C (80 °F) von gleich oder weniger als 300 aufweist.

12. Verfahren gemäß Anspruch 2, wobei das Dispergiermittel dem Wasser vor dem Zugeben des anionisch und hydrophob modifizierten (Hydroxy)alkylcelluloseethers zugegeben wird.

13. Verfahren gemäß Anspruch 2, beinhaltend die folgenden Schritte:
A) Pumpen der wässrigen Zementierzusammensetzung in die Verrohrung nach unten,
B) Pumpen der wässrigen Zementierzusammensetzung nach oben in den die Verrohrung umgebenden Ringraum,
C) Fortsetzen des Pumpens, bis die wässrige Zusammensetzung jenen Abschnitt des ringförmigen Raums, der abgedichtet werden soll, füllt,
und
D) Halten der wässrigen Zementierzusammensetzung an Ort und Stelle, bis der Zement abbindet.

## Revendications

1. Une composition aqueuse de cimentation pour cimenter un tubage dans un trou de forage d'un puits comprenant :
(a) de l'eau
et
(b) une composition de cimentation comprenant :
(i) un ciment hydraulique,
(ii) un éther d'(hydroxy)alkylcellulose modifiée de manière hydrophobe et de manière anionique,
(iii) un dispersant,
et
(iv) facultativement un ou plusieurs autres additifs ajoutés classiquement aux compositions aqueuses de cimentation utiles dans la cimentation de tubages dans le trou de forage de puits.

2. Une méthode pour cimenter un tubage dans un trou de forage d'un puits comprenant l'utilisation d'une composition aqueuse de cimentation comprenant :
(a) de l'eau
et
(b) une composition de cimentation comprenant :
(i) un ciment hydraulique,
(ii) un éther d'(hydroxy)alkylcellulose modifiée de manière hydrophobe et de manière anionique,
(iii) un dispersant,
et
(iv) facultativement un ou plusieurs autres additifs ajoutés classiquement aux compositions aqueuses de cimentation utiles dans la cimentation de tubages dans le trou de forage de puits.

3. La méthode de la revendication 2 dans laquelle l'éther d'(hydroxy)alkylcellulose modifiée de manière hydrophobe et de manière anionique est une hydroxyéthylcellulose modifiée de manière hydrophobe et de manière anionique.

4. La méthode de la revendication 3 dans laquelle l'(hydroxy)éthylcellulose modifiée de manière hydrophobe et de manière anionique présente une substitution molaire d'oxyde d'éthylène allant de 0,5 à 3,5.

5. La méthode de la revendication 3 dans laquelle l'(hydroxy)éthylcellulose modifiée de manière hydrophobe et de manière anionique présente un degré de substitution hydrophobe allant de 0,001 à 0,025.

6. La méthode de la revendication 2 dans laquelle l'éther d'(hydroxy)alkylcellulose modifiée de manière hydrophobe et de manière anionique a une masse moléculaire moyenne en poids allant de 100 000 à 4 000 000 Daltons.

7. La méthode de la revendication 3 dans laquelle l'(hydroxy)éthylcellulose modifiée de manière hydrophobe et de manière anionique présente un degré de substitution anionique allant de 0,001 à 1.

8. La méthode de la revendication 2 dans laquelle le dispersant est un polymère sulfoné, un condensat de mélamine formaldéhyde, un condensat de naphtalène formaldéhyde, un polymère polycarboxylate ramifié, ou un polymère polycarboxylate non ramifié.

9. La méthode de la revendication 2 dans laquelle le dispersant est un condensat sulfoné de mélamine formaldéhyde, un condensat de mélamine formaldéhyde, un condensat sulfoné de naphtalène formaldéhyde, un sel de sodium d'un condensat sulfoné de naphtalène formaldéhyde, un sel de potassium d'un condensat sulfoné de naphtalène formaldéhyde, un poly(naphtalène sulfonate), un polyacrylamide sulfoné, un condensat d'une cétone, d'un aldéhyde et de sulfite de sodium, ou un copolymère sulfoné de styrène/anhydride maléique.

10. La méthode de la revendication 2 dans laquelle la composition de cimentation comprend un additif ou plus sélectionné parmi le chlorure de calcium, le chlorure de sodium, le gypse, le silicate de sodium, l'eau de mer, la bentonite, la terre de diatomées, le charbon, la perlite, la pouzzolane, l'hématite, l'ilménite, la baryte, la farine de silice, le sable, des lignines, des lignosulfonates de sodium, des lignosulfonates de calcium, un éther de carboxyméthylhydroxyéthylcellulose, la gilsonite, des coques de noix, des flocons de cellophane, le ciment de gypse, la bentonite-carburant diesel, des fibres de nylon, ou le latex.

11. La méthode de la revendication 2 dans laquelle la composition aqueuse de cimentation a une PV initiale à 26,7 °C (80 °F) inférieure ou égale à 300.

12. La méthode de la revendication 2 dans laquelle le dispersant est ajouté à l'eau préalablement à l'ajout de l'éther d'(hydroxy)alkylcellulose modifiée de manière hydrophobe et de manière anionique.

13. La méthode de la revendication 2 comprenant les étapes consistant à :
A) pomper vers le bas dans ledit tubage ladite composition aqueuse de cimentation,
B) pomper ladite composition aqueuse de cimentation vers le haut dans l'annulaire entourant ledit tubage,
C) continuer ledit pompage jusqu'à ce que ladite composition aqueuse emplisse la portion de l'espace annulaire dont le scellage est désiré,
et
D) maintenir ladite composition aqueuse de cimentation en place jusqu'à ce que le ciment prenne.
